# EUROPEAN PATENT APPLICATION

(11) **EP 4 712 008 A1**
(43) Date of publication of application: **18.03.2026**
(21) Application number: 25162463.1
(22) Date of filing: 12.09.2024
(51) Int. Cl.: G06Q 50/00, G06Q 10/1093, H04M 1/72, G06F 3/0482, G06F 3/04855, G06F 3/0488, G06F 16/435, G06F 16/9535, H04L 51/52, H04L 67/306, H04M 1/27475, H04W 4/21

(54) **FACILITATING ATTENDING OF EVENTS BETWEEN USERS OF A COMPUTER NETWORK, AND CONTROLLING A USER INTERFACE ON A MOBILE DEVICE**

(62) Divisional of application: 24857477.4
(71) Applicant: 2361307 Alberta Inc., Calgary, Alberta T2P 4K9 (CA)
(72) Inventor: SAHI, Varinder Singh, Calgary, T2P 4K9 (CA)
(74) Representative: Murphy, Orla

(57) **Abstract**

Attending of events between users in a computer network is facilitated. Event parameters defining an event are received from a first user of the network. The event parameters include a location of the event and a date of the event. The event parameters are allowed to be viewed by each of multiple second users in the network. An indication of interest in the event is received from each of one or more of the second users. The first user is enabled to initiate communication with each of the one or more second users interested in the event while the one or more second users interested in the event are prevented from initiating communication with the first user. A selection, from among the one or more second users interested in the event, of a second user with whom the first user wishes to attend the event is received from the first user. A message is transmitted to the selected second user indicating that they have been selected to attend the event with the first user.

## Description

### Field

The present disclosure relates to social media networks and in particular to methods and systems for facilitating attending of events between users of a computer network, and for controlling a user interface on a mobile device.

### Background

Dating applications ("dating apps") are a form of mobile device application that are used by subscribers of a computer network to facilitate these users of the service to connect with one another through the app, and to arrange dates or other meetings.

One problem with current dating apps is the relatively long lead time required to convert an initial contact between a pair of users of the app and the arranging of a date or other agreed meet-up. For example, prior to arranging a date, a user must typically "match" with another user of the service. For example, a first user must indicate their interest in meeting with another, second user of the service, and the two users are only considered to be matched once the second user has reciprocated and also indicated their interest in the first user.

After being matched, the users must engage in communication via the app prior to arranging an agreed location and date/time to meet in person. This, again, takes times. Furthermore, many matches do not result in dates. For example, some users, despite being matched with other users, may not respond to messages sent to them. Still further, many users may decide that they do not wish to meet in person after an initial exchange of messages. For this reason, users often manage multiple simultaneous conversations or "chats" with multiple different other users of the service, knowing that not all matches will lead to an actual date. This can be time-consuming and laborious.

It would be preferable if methods and systems existed to reduce or eliminate the lead time required to convert an initial contact into an agreed-upon date and time for a date.

### Summary

According to a first aspect of the disclosure, there is provided a method of facilitating attending of events between users in a computer network, comprising: performing by one or more computer processors: receiving, from a first user in the network, event parameters defining an event, wherein the event parameters include: a location of the event; and a date of the event; allowing the event parameters to be viewed by each of multiple second users in the network; receiving, from each of one or more of the second users, an indication of interest in the event; enabling the first user to initiate communication, using the one or more computer processors, with each of the one or more second users interested in the event while preventing the one or more second users interested in the event from initiating communication, using the one or more computer processors, with the first user; receiving, from the first user, a selection, from among the one or more second users interested in the event, of a second user with whom the first user wishes to attend the event; and transmitting a message to the selected second user indicating that they have been selected to attend the event with the first user.

The event parameters may further include one or more event parameters selected from the group consisting of: one or more activities associated with the event; a time of the event; an age range; one or more genders; a type of event; one or more images; and a payment option.

The event parameters may further include each event parameter in the group consisting of: the one or more activities associated with the event; the time of the event; the age range; the one or more genders; the type of event; the one or more images; and the payment option.

The event parameters may further include one or more event parameters selected from the group consisting of: an age range; one or more genders; and a type of event; each user in the network is associated with one or more user parameters selected from the group consisting of: an age; one or more genders; and one or more preferred types of events; and allowing the event parameters to be viewed by each of the second users in the network comprises: identifying the second users by filtering the users in the network based on the event parameters defining the event and based on the one or more user parameters associated with each user; and allowing the event parameters to be viewed by each of the identified second users.

The one or more computer processors may be configured to: prevent the first user from selecting the second user with whom the first user wishes to attend the event before the first user has initiated communication, using the one or more computer processors, with the second user with whom the first user wishes to attend the event.

According to a further aspect of the disclosure, there is provided a computer-readable medium storing computer program code configured, when executed by one or more computer processors, to cause the one or more computer processors to perform a method comprising: receiving, from a first user in a network, event parameters defining an event, wherein the event parameters include: a location of the event; and a date of the event; allowing the event parameters to be viewed by each of multiple second users in the network; receiving, from each of one or more of the second users, an indication of interest in the event; enabling the first user to initiate communication, using the one or more computer processors, with each of the one or more second users interested in the event while preventing the one or more second users interested in the event from initiating communication, using the one or more computer processors, with the first user; receiving, from the first user, a selection, from among the one or more second users interested in the event, of a second user with whom the first user wishes to attend the event; and transmitting a message to the selected second user indicating that they have been selected to attend the event with the first user.

According to a further aspect of the disclosure, there is provided a computer-readable medium storing computer program code configured, when executed by one or more computer processors, to cause the one or more computer processors to control a user interface on a mobile device, comprising: displaying, on a display of the mobile device, a first user interface element for creating an event by a first user; simultaneously displaying, on the display: at least a portion of a first shortlist comprising one or more profiles of one or more second users interested in the event; and at least a portion of a second shortlist comprising, for each of one or more second users selected from the one or more second users interested in the event, one or more second user interface elements.

Each profile of the one or more profiles may comprise an image of the second user associated with the profile.

Each profile of the one or more profiles may comprise a user interface element for removing, from the first shortlist, the second user associated with the profile.

Each profile of the one or more profiles may comprise a user interface element for allowing the first user to initiate communication, using the one or more computer processors, with the second user associated with the profile.

For each second user in the second shortlist, the one or more second user interface elements may comprise one or both of: a user interface element for allowing the first user to initiate communication, using the one or more computer processors, with the second user; and a user interface element for sending, using the one or more computer processors, a preset message to the second user confirming that the second user has been selected to attend the event with the first user.

Controlling the user interface may further comprise enabling, by the one or more computer processors, scrolling of the first shortlist without causing the at least a portion of the second shortlist to no longer be displayed on the display.

Controlling the user interface may further comprise enabling, by the one or more computer processors, scrolling of the second shortlist without causing the at least a portion of the first shortlist to no longer be displayed on the display.

Controlling the user interface may further comprise enabling, by the one or more computer processors, scrolling of the first shortlist in a first direction and scrolling of the second shortlist in a second direction.

The first direction may be one of a horizontal direction extending across a width of the mobile device and a vertical direction extending across a height of the mobile device. The second direction may be the other of the horizontal direction extending across the width of the mobile device and the vertical direction extending across the height of the mobile device.

According to a further aspect of the disclosure, there is provided a method of controlling a user interface on a mobile device, comprising: displaying, on a display of the mobile device, a first user interface element for creating an event by a first user; simultaneously displaying, on the display: at least a portion of a first shortlist comprising one or more profiles of one or more second users interested in the event; and at least a portion of a second shortlist comprising, for each of one or more second users selected from the one or more second users interested in the event, one or more second user interface elements.

This summary does not necessarily describe the entire scope of all aspects. Other aspects, features, and advantages will be apparent to those of ordinary skill in the art upon review of the following description of specific embodiments.

### Drawings

Embodiments of the disclosure will now be described in detail in conjunction with the accompanying drawings of which:
FIG. 1 is a schematic diagram of a computer network configured to facilitate attending of events between users of a computer network, according to an embodiment of the disclosure;
FIG. 2 is a schematic diagram of components of a server of the computer network of FIG. 1;
FIG. 3 is a flow diagram of a method of facilitating attending of events between users of a computer network, according to an embodiment of the disclosure;
FIGS. 4A and 4B are example user interfaces on a mobile device for viewing published events, according to an embodiment of the disclosure;
FIGS. 5A and 5B are further example user interfaces on a mobile device for viewing published events, according to an embodiment of the disclosure;
FIG. 6 is an example user interface on a mobile device for viewing a chat history, according to an embodiment of the disclosure;
FIG. 7 is an example user interface on a mobile device for viewing a user's profile, according to an embodiment of the disclosure;
FIGS. 8A to 8I are example user interfaces on a mobile device for creating an event, according to an embodiment of the disclosure;
FIGS. 9A to 9F are example user interfaces on a mobile device for viewing and initiating communication with users who have indicated their interest in an event, according to an embodiment of the disclosure; and
FIGS. 10A and 10B are example user interfaces on a mobile device showing a chat history, according to an embodiment of the disclosure.

### Detailed Description

The present disclosure seeks to provide methods and systems for facilitating sharing or otherwise attending of events between users of a computer network, and for controlling a user interface on a mobile device. While various embodiments of the disclosure are described below, the disclosure is not limited to these embodiments, and variations of these embodiments may well fall within the scope of the disclosure which is to be limited only by the appended claims.

Generally, according to embodiments of the disclosure, there are described methods and systems for facilitating attending of events between users of a computer network. For example, one or more computer processors in the network (for example, one or more computer processors of one or more servers in the network, or simply "the server") may receive, from a first user of the network, event parameters defining an event. The event parameters may include a location of the event, a future date and a future time of the event, and an activity or an event type associated with the event. For example, the first user ("the event creator"), by interacting with a suitable mobile application installed on their mobile device, may initiate an event-creation process in which these and potentially various other event parameters are defined. These event parameters are then transmitted from the mobile device of the event creator to the server. The server may then allow the event parameters to be viewed by each of multiple second users of the network. For example, each other user of the network may access, by interacting with the same mobile application installed on their mobile device, a list of events (and their associated event parameters) that have been created by other users of the network and that have been made available for viewing by the server.

The server may then receive, from each of one or more of the second users, an indication of interest in the event. For example, one or more of the second users, by interacting with the mobile application installed on their mobile device, may cause a message to be transmitted from their mobile device to the server, this message indicating to the server that the user is interested in attending the event with the event creator. The server may then relay this indication of interest to the event creator, and may enable the event creator to initiate communication, using the server, with each of the one or more second users interested in the event ("interested users"), while preventing the one or more interested users from initiating communication, using the server, with the event creator. For example, the server may receive a message from the event creator that is to be relayed to an interested user and, in response to passing the message to the interested user, the server may then allow the interested user to reply to the event creator with their own messages.

The server may then receive, from the event creator, a selection, from among the one or more interested users, of an interested user with whom the event creator wishes to attend the event, and in response to this the server may transmit a message to the selected interested user indicating that they have been selected to attend the event with the event creator. The server may additionally transmit a message to each interested user that was not selected by the event creator, advising them that they were not selected to attend the event with the event creator.

According to embodiments of the disclosure, by first generating or otherwise creating an event with a number of associated event parameters, and then sharing or otherwise publishing details of the event for viewing by other users of the network, the event creator is able to reduce the effort and lead time required in order to attend the event with another user of the network. In particular, users that indicate an interest in the event are more likely to attend the event at the agreed date, time, and location, since such details have already been pre-set by the event creator. As a result, there is no need for users to first spend time and effort establishing, using back-and-forth communication between one another, their various event interests, likes, and dislikes, and then (assuming they still wish to meet), arranging a date, time, and location for the meeting.

Embodiments of the disclosure will now be described in detail with reference to the drawings.

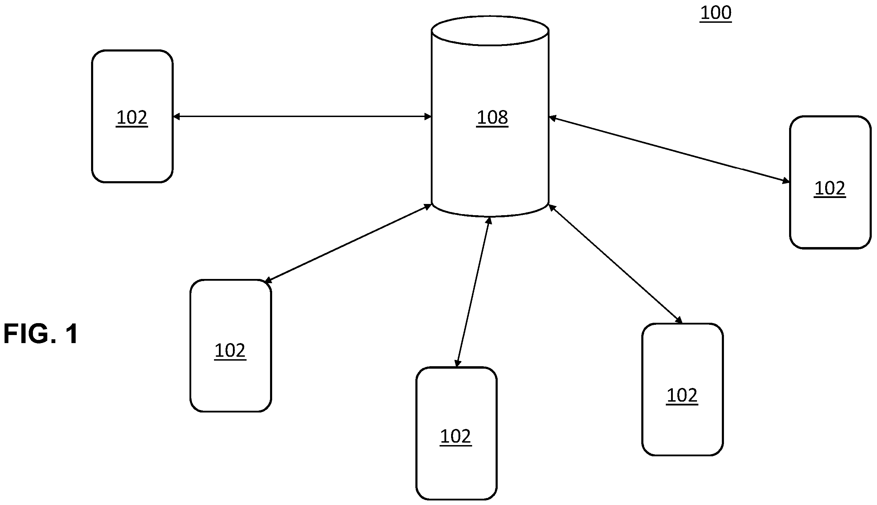

Turning first to FIG. 1, there is shown an example computer network 100 that is configured to implement methods of facilitating attending of events between users/members of computer network 100, as described herein. Computer network 100 includes a number of mobile devices 102 or other end-user devices, configured to wirelessly (for example, over the Internet) communicate with one another via a centralized server 108 or other central computing device (or computing devices). While a single server 108 is shown in FIG. 1, according to other embodiments more than one server 108 may be used to process and relay data that has been transmitted to server 108 from mobile devices 102.

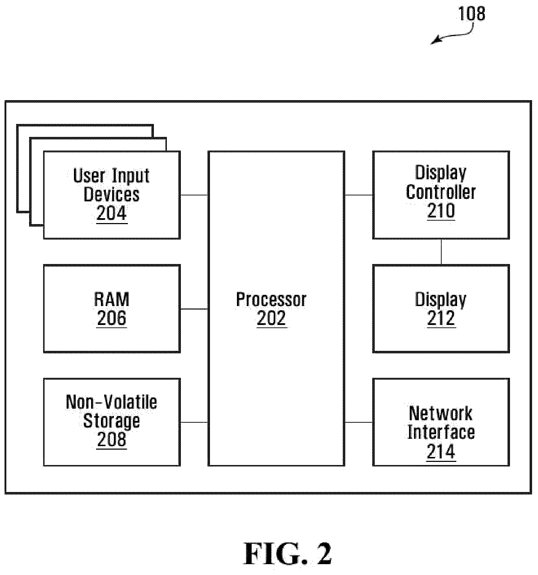

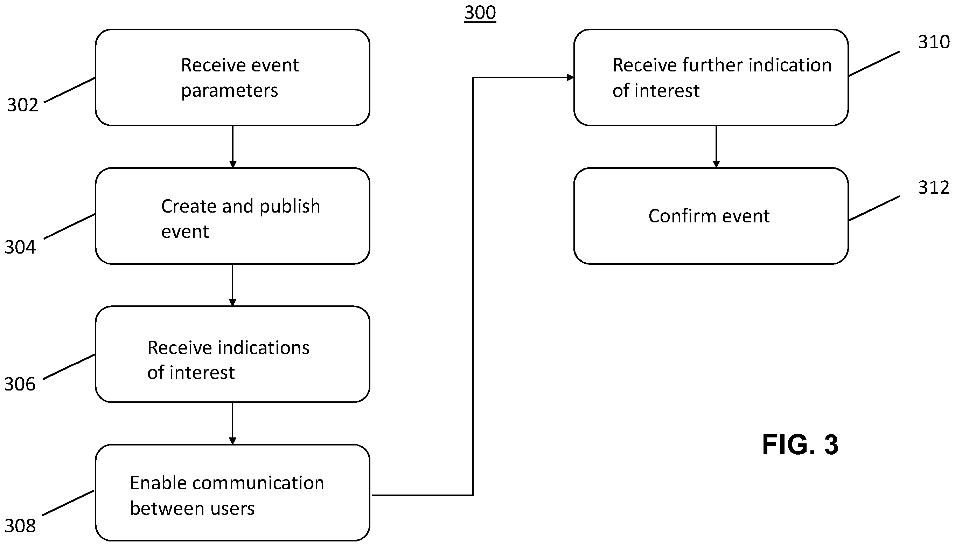

Referring now to FIG. 2, there is depicted an example embodiment of server 108 that is comprised in computer network 100. Server 108 comprises a processor 202 that controls the overall operation of server 108. Processor 202 is communicatively coupled to and controls several subsystems. These subsystems comprise user input devices 204, which may comprise, for example, any one or more of a keyboard, mouse, touch screen, and voice control; random access memory ("RAM") 206 which stores computer program code for execution at runtime by processor 202; non-volatile storage 208 which stores the computer program code executed by RAM 206 at runtime; a display controller 210 which is communicatively coupled to and controls a display 212; and a network interface 214 which facilitates network communications with one or more computer networks to which server 108 id communicatively coupled. Non-volatile storage 208 has stored on it computer program code that is loaded into RAM 206 at runtime and that is executable by processor 202. When the computer program code is executed by processor 202, processor 202 causes server 108 to implement one or more methods for facilitating attending of events between users of computer network 100, such as described in more detail in connection with FIGS. 3-9F below. Additionally or alternatively, multiple such servers 108, using distributed computing, may collectively perform the one or more methods for facilitating attending of events between users of computer network 100. While the system and components depicted in FIG. 2 are described in connection with server 108, analogous systems and components may also be used by each mobile device 103 in order that they may implement their own intended functionality.

Turning to FIG. 3, there is shown a flow diagram of an example method of facilitating attending of events between users of a computer network, according to an embodiment of the disclosure.

At block 302, a number of event parameters are received. For example, a first user of a mobile device 102 may opt to create, using their mobile device, an event by defining the event according to a number of event parameters, described in further detail below. The event parameters are then transmitted from mobile device 102 to server 108.

At block 304, the event is created and published. In particular, server 108 may (or may not, as the case may be) alert other users of computer network 100 of the event's creation, and such other users may access details of the created event by communicating with server 108. For example, each such other user may choose to view, using their mobile device 102 in communication with server 108, details of any created events.

At block 306, one or more indications of interest are received at server 108. For example, one or more users of computer network 100 may, upon reviewing available events, indicate their interest in any such events by interacting with the user interface on their mobile device 102. These indications of interest are received at server 108, and server 108 may in turn inform the event creator of the interest in their event by such other users of computer network 100.

At block 308, communication between the event creator and users that have indicated their interest in the event ("interested users") is enabled. For example, the event creator, by interacting with the user interface on their mobile device 102, may send one or more messages to server 108 that are then relayed to the interested user for whom the one or more messages are intended. Furthermore, once (but not before) an interested user has received a message from the event creator, the interested user may then send messages of their own to the event creator, again by sending one or more messages to server 108 that are then relayed to the event creator.

At block 310, the event creator indicates their intention to attend the event with a particular one of the interested users. In particular, once the event creator has initiated communication with the interested user in question, the event creator may then confirm that they wish to attend the event with this interested user. For example, the event creator may interact with the user interface on their mobile device 102, and an appropriate message is transmitted from mobile device 102 of the event creator to server 108.

At block 312, server 108 transmits a message to the selected user, advising them that they have been selected to attend the event with the event creator, and may transmit messages to other interested users with whom the event creator has communicated in respect of the event to advise such other non-selected users that they have not been selected.

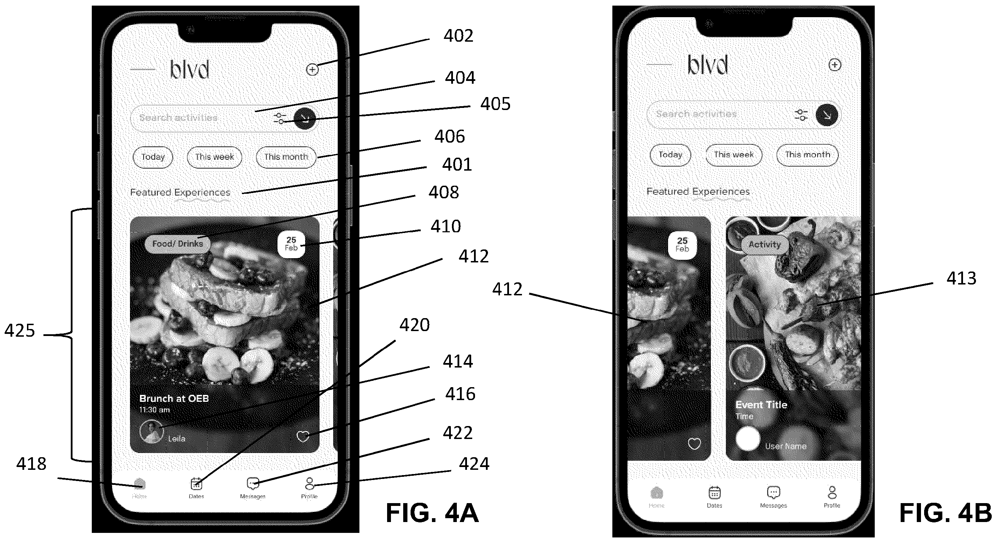

Turning now to FIGS. 4A-9F, there are shown examples of user interfaces that may be presented to users of computer network 100 on their mobile devices 102.

In FIGS. 4A and 4B, there are shown example user interfaces for allowing a user to browse, using their mobile device 102, various events that have been created and published. The user may create their own event by interacting with a user interface element 402, and may search for events by entering text into search bar 404. Search bar 404 additionally includes a user interface element 405 that may allow the user to filter created events based on various event parameters. For example, instead of searching for a specific event by entering text into search bar 404, the user may filter for events that are set to take place on a certain day of the week, for instance.

Beneath search bar 404 are located a number of user interface elements 406 that may be switched on/off to provide additional filtering functionality. For example, if the user wishes to search for only events that have been created today, they may push the button marked "Today".

Beneath user interface elements 406, a horizontally-scrollable carousel 425 of created events is displayed. According to some embodiments, carousel 425 may comprise a list of "featured events" 401 which may comprise events sorted according to various parameters, such as a social media score, whether the event has been sponsored by a third party or is a paid-for advertisement, etc. For each displayed event is shown a time at which the event will take place, a date 410 on which the event will take place, one or more activities 408 associated with the event, the name of the event creator and an image 414 associated with the event creator, and a relatively larger image (or "event photo") 412 that the event creator uploaded in connection with the event.

The user may scroll through the carousel 425 of events that have been located in response to the user's search query. For example, the user may scroll through various events by moving their finger in contact with the screen of their mobile device 102 in a horizontal direction, between the left and right edges of the screen portion identified by carousel 425. For instance, as can be seen in FIG. 4B, the user has scrolled in a leftward direction away from the event shown in FIG. 4A, thereby revealing another event 413. According to this embodiment, the user may scroll horizontally through the displayed events, although according to other embodiments the events may be displayed in such a away as to be scrolled through vertically.

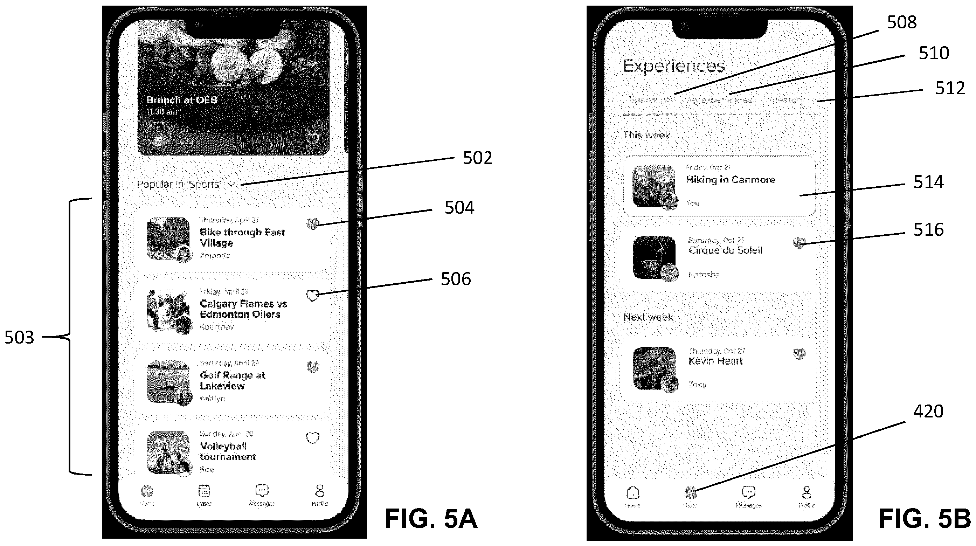

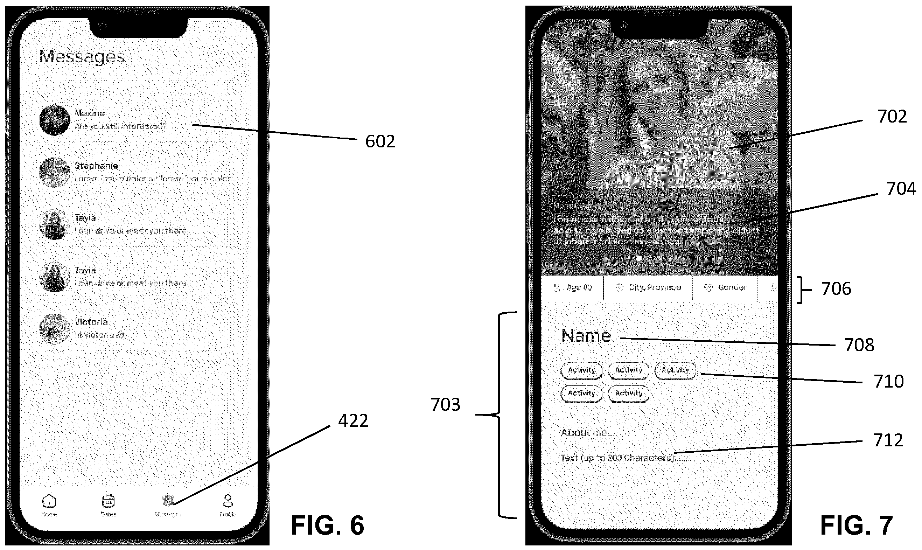

At the bottom of the screen shown in FIGS. 4A and 4B, a number of additional user interface elements are shown and that the user may interact with. In particular, a Home button 418 allows the user to navigate to the user interface shown in FIGS. 4A and 4B, a Dates button 420 allows the user to navigate to the user interface shown in FIG. 5B, a Messages button 422 allows the user to navigate to the user interface shown in FIG. 6, and a Profile button 424 allows the user to navigate to the user interface shown in FIG. 7.

A user interface element 416 is presented next to each event. By interacting with (e.g., by pressing) user interface element 416, the user may indicate their interest in the event. Therefore, if the user presses or otherwise interacts with user interface element 416, the creator of the event is then informed of the user's interest in the event (for example, as described above in connection with FIG. 3). The appearance of user interface element 416 may change in response to the user indicating their interest in the event.

Turning now to FIG. 5A, there is shown a modified view of the user interface presented in FIGS. 4A and 4B. In FIG. 5A, the user has scrolled downwardly away from the horizontally-scrollable carousel 425 of events presented in FIGS. 4A and 4B. For example, the user has scrolled by moving their finger in contact with the screen of their mobile device 102 in a vertical direction, between the top and bottom edges of the screen portion identified by element 503. This has resulted in a number of events being displayed on the screen, in the form of a vertically-scrollable carousel 503, these events being oriented in a vertical orientation, directly beneath the horizontally-scrollable carousel 425 of events. According to some embodiments, carousel 503 may comprise a shortlist of specific events 502. In the case of FIG. 5A, the shortlist of specific events 502 comprises events that are deemed sports-based events and that are deemed popular; the popularity of an event may be based, for example, on the number of users that have indicated an interest in the event (described in further detail below). According to this embodiment, the user may scroll vertically through the displayed events, although according to other embodiments the events may be displayed in such a away as to be scrolled through horizontally.

A user interface element 506 is presented next to each event. By interacting with (e.g., by pressing) user interface element 506, the user may indicate their interest in the event. Therefore, if the user presses or otherwise interacts with user interface element 506, the creator of the event is then informed of the user's interest in the event (for example, as described above in connection with FIG. 3). The appearance of user interface element 506 may change in response to the user indicating their interest in the event (for example, the appearance of user interface element 506 may change to that of user interface element 504).

Turning to FIG. 5B, there is shown an example user interface that is displayed in response to the user activating Dates button 420. In particular, the user interface displays a select number of upcoming events. The events that are shown may be filtered according to various options 508 that may be selected at the top of the screen. For example, the user may opt to show all upcoming events 508, only those events that they have created 510, or all past events that have been created 512.

In the central portion of the screen, the filtered list of events 514 is shown. According to this embodiment, the user may scroll vertically through the displayed events, although according to other embodiments the events may be displayed in such a away as to be scrolled through horizontally. A user interface element 516 is presented next to each event. By interacting with (e.g., by pressing) user interface element 516, the user may indicate their interest in the event. Therefore, if the user presses or otherwise interacts with user interface element 516, the creator of the event is then informed of the user's interest in the event (for example, as described above in connection with FIG. 3).

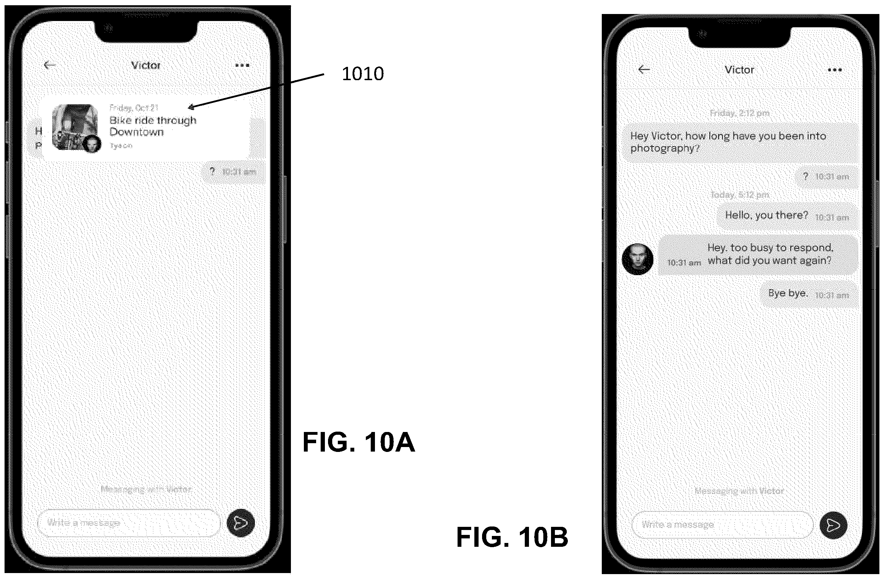

Turning to FIG. 6, there is shown an example user interface that is displayed in response to the user activating Messages button 422. In particular, the user interface displays the option to view a chat history (i.e., a sequence of exchanged messages) between the user and other users of computer network 100 with whom the user has communicated, examples of which are shown in FIGS. 10A and 10B.

Turning to FIG. 7, there is shown an example user interface that is displayed in response to the user activating Profile button 424. According to this example user interface, the user may edit various details pertaining to their profile that is viewable by other users of computer network 100. For example, the user may edit one or more images 702 associated with their profile (e.g., by removing existing images and/or uploading new images), a caption 704 associated with an image 702, their age, residence, and gender presented in a horizontally-scrollable carousel 706, their name 708, and their preferred activities, hobbies, and/or interests 710. The user may further edit additional information 712 relating to themselves. Name 708, interests/hobbies 710, and additional information 712 may be comprised in a vertically-scrollable carousel 703. Scrolling through carousel 706 may reveal other editable parameters such as the user's height and occupation. Interests/hobbies 710 that are in common between the user associated with the user profile and user operating the user interface may be displayed differently (for example, may be highlighted using a different colour) to interests/hobbies 710 that are not in common between the user associated with the user profile and the user operating the user interface. This list is not exhaustive, nor is it necessarily inclusive, and other details may be provided / certain details may be omitted according to other embodiments.

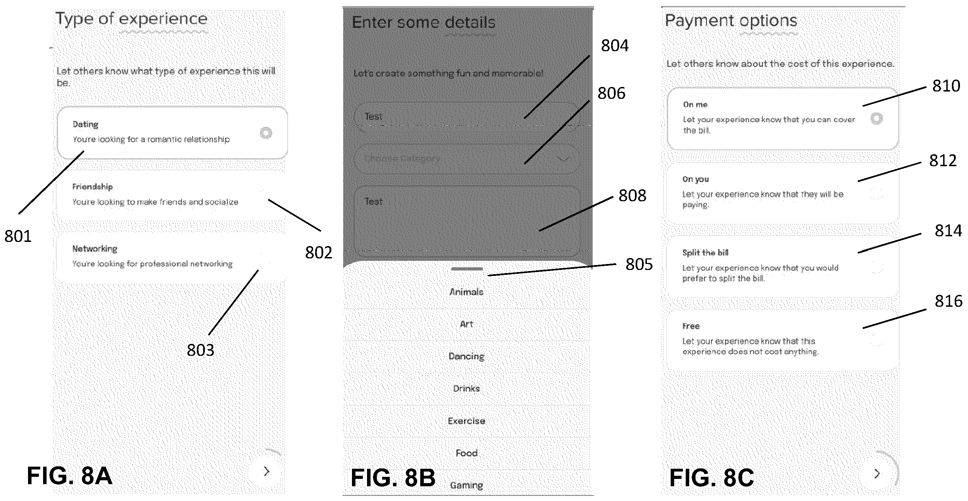

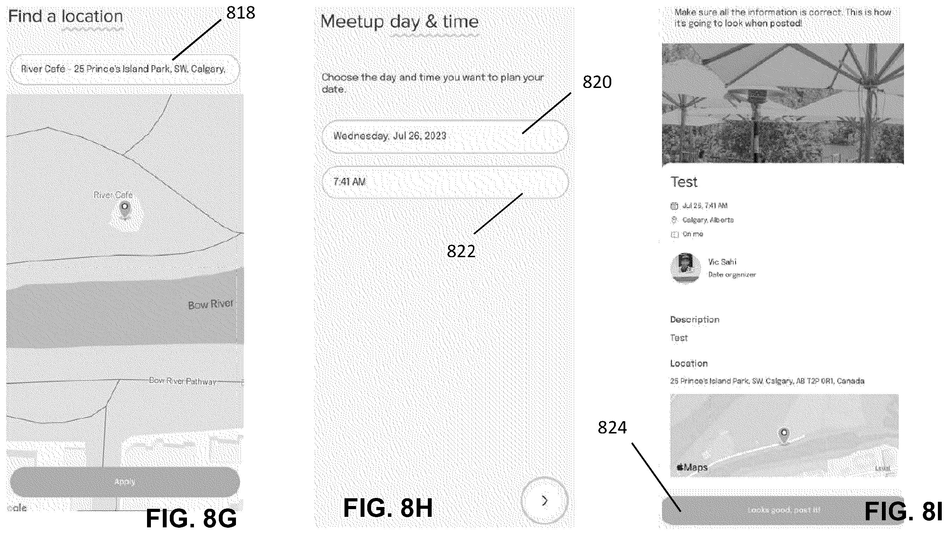

In FIGS. 8A-8I, there are shown and will now be described various user interfaces that are presented to the user when the user wishes to create an event, i.e., in response to the user pressing or otherwise interacting with user interface element 402 seen in FIGS. 4A and 4B.

FIG. 8A shows a user interface that is presented in response to the user ("event creator") interacting with user interface element 402 and that prompts the event creator to specify the type of event they wish to create. For example, if the event creator wishes to meet other users of the network with the goal of dating other such users, then the event creator may select the dating option 801. If the event creator wishes to meet other users of the network with the goal of befriending other such users, then the event creator may select the friendship option 802. And, if the event creator wishes to meet other users of the network with the goal of networking with other such users in a professional capacity, then the event creator may select the networking option 803. According to other embodiments, the event creator may be presented with the option of specifying other types of events.

FIG. 8B shows a user interface that is presented to the event creator and which prompts them to specify details of the event, such as a name 804 for the event, a category 806 of the event (which, if pressed, reveals a vertically-scrollable list 805 of selectable categories), and additional text 808 relating to the event.

FIG. 8C shows a user interface that is presented to the event creator and which prompts them to specify a preferred payment method for the event. For example, the event creator may indicate that they will cover costs associated with the event 810, that the other user with whom the event will be attended will cover the costs associated with the event 812, that the costs associated with the event will be shared by both parties 814, or that no costs are likely to be incurred 816.

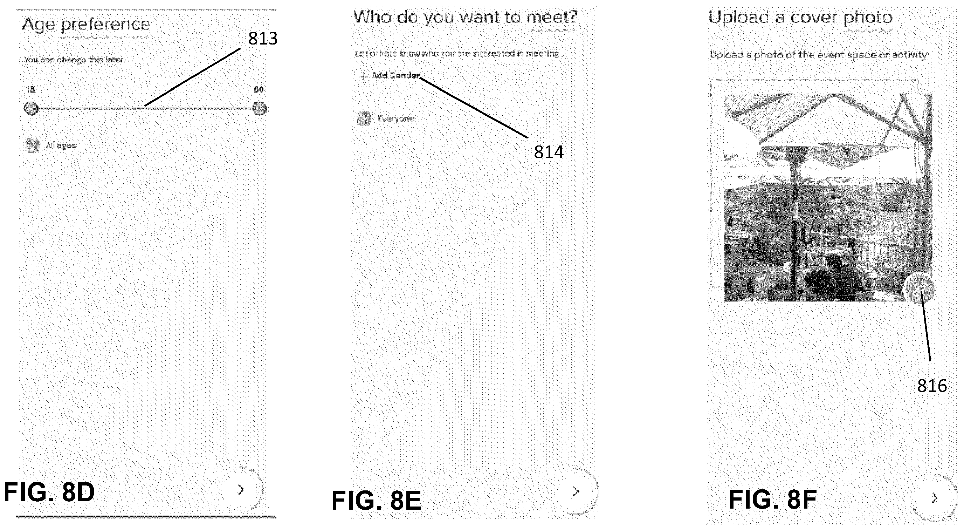

FIG. 8D shows a user interface that is presented to the event creator and which prompts them to specify an age preference 813. The indicated age preference will be used by server 108 to filter the other users of computer network 100 to whom details of the event will be made accessible.

FIG. 8E shows a user interface that is presented to the event creator and which prompts them to specify one or more genders 814. The indicated gender or genders will be used by server 108 to further filter the other users of computer network 100 to whom details of the event will be made accessible.

FIG. 8F shows a user interface that is presented to the event creator and which prompts them to upload one or more images that will be accompany the publication of the event. For example, the event creator may upload an image of a typical view or landscape corresponding to a location where the event will take place.

FIG. 8G shows a user interface that is presented to the event creator and which prompts them to specify an address or other location for the event, by providing user input to text bar 818. For instance, the event creator may type an address into text bar 818 and a corresponding pin may be placed in a portion of a map that is generated and displayed beneath text bar 818.

FIG. 8E shows a user interface that is presented to the event creator and which prompts them to specify a date 820 and a time 822 for the event.

The event creator is then presented with the user interface shown in FIG. 8I which provides a summary of the various event parameters that the event creator has entered when interacting with the various user interfaces shown in FIGS. 8A-8H. The details that are displayed to the user in FIG. 8I correspond to the details that will be shared with or otherwise made viewable to various other users of the network. The event creator may then interact with user interface element 824 which confirms that the event creator wishes to proceed with publication of the event.

In response to confirmation that the event is to be published, server 108 publishes the event. Publication of the event may comprise server 108 sending a notification to various other users of computer network 100 that a new event has been created. In any case, whether or other users are notified of the event's creation, details of the event (i.e., the event parameters specified by the event creator) may then be viewed by other users of computer network 100. Server 108 selectively filters, from among all users of computer network 100, only those users that are permitted to view the event, based for example on various filtering requirements specified by the event creator. For instance, if the event creator only wishes to attend the event with women of age 35-55 and in a networking context (and indicated as much when interacting with the user interfaces shown in FIGS. 8A, 8D, and 8E), then only other users who have indicated their gender as woman and who have indicated their age as being between 35 and 55, and who are interested in networking, may view the event.

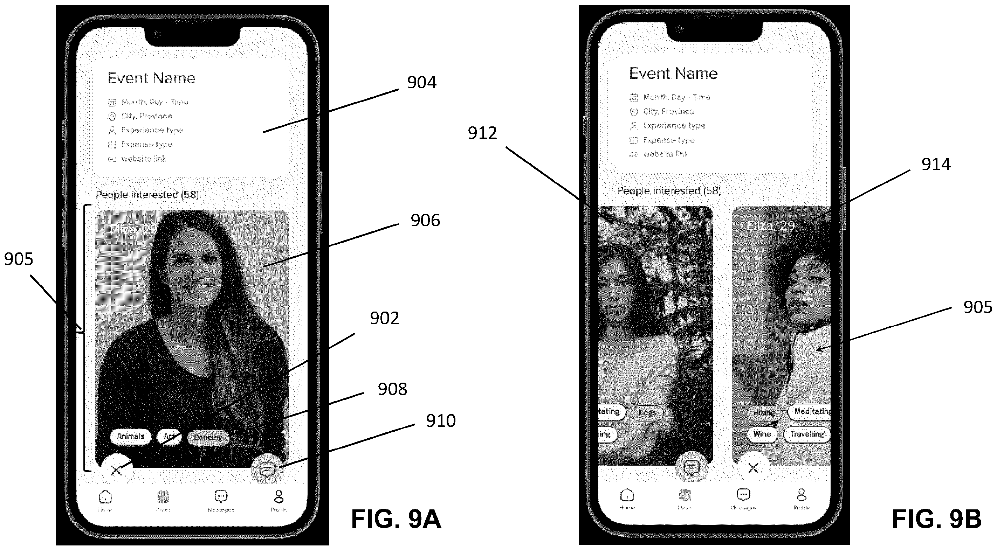

Turning now to FIGS. 9A-9F, there are shown various user interfaces presented to the event creator.

At the top of the user interface in FIG. 9A is shown an event title card 904 displaying the name of the event and various other details of the event, such as the location, date and time, the type of event, and the payment option selected for the event. The user interface shown in FIG. 9A may be navigated to by the event creator pressing or otherwise interacting with user interface element 514 (FIG. 5B) which corresponds to an event that the event creator has created. Alternatively, the event creator may press or otherwise interact with user interface element 510 (FIG. 5B) and then further select a particular event that the event creator has created.

Beneath event title card 904, a horizontally-scrollable carousel 905 of interested users is displayed. In particular, for each interested user is displayed an image 906 (such as the interested user's profile photo), the name and age 909 of the interested user (which, if pressed, will navigate the user interface to the interested user's user profile), any interests/hobbies 908 of the interested user, as well as a first user interface element 902 and a second user interface element 910. Interests/hobbies 908 that are in common between the interested user and the event creator may be displayed differently (for example, may be highlighted using a different colour) to interests/hobbies 908 that are not in common between the interested user and the event creator.

By interacting with user interface element 902, the event creator indicate to server 108 that they are not interested in attending the event with the interested user in question, and the displayed profile image of the interested user (and associated details) are removed from carousel 905. On the other hand, if the event creator is potentially interested in attending the event with the interested user, then the event creator may initiate communication with the interested user by pressing or otherwise interacting with user interface element 910. Interacting with user interface element 910 will display a chat window (examples of which are shown in FIGS. 10A and 10B) that is configured to display any messages that are exchanged between the event creator and the interested user. Any interested user is not permitted to initiate communication with the event creator until such a time that the event creator has initiated communication with them. This may help prevent the event creator receiving unwanted messages such as spam or messages of a harassing nature.

Similarly to the user interface shown in connection with FIGS. 4A and 4B, the event creator may scroll through carousel 905 of interested users that have indicated their interest in the event. For example, the user may scroll through various interested users by moving their finger in contact with the screen of their mobile device 102 in a horizontal direction, between the left and right edges of the screen portion identified by carousel 905. For instance, as can be seen in FIG. 9B, the user has scrolled through carousel 905, thereby revealing another two interested users 912 and 914. According to this embodiment, the user may scroll horizontally through the displayed interested users, although according to other embodiments the interested users may be displayed in such a away as to be scrolled through vertically.

As and when other users of computer network 100 indicate their interest in the event (as described above, by selecting, on their mobile device 102, user interface element 416 shown in FIG. 4A, or user interface 506 shown in FIG. 5A), the event creator is notified of such interest. In addition, an image corresponding to the interested user (such as a profile photo), as well as associated details and user interface elements 902 and 910, are added to horizontally-scrollable carousel 905, and the event creator may interact with the image as described above.

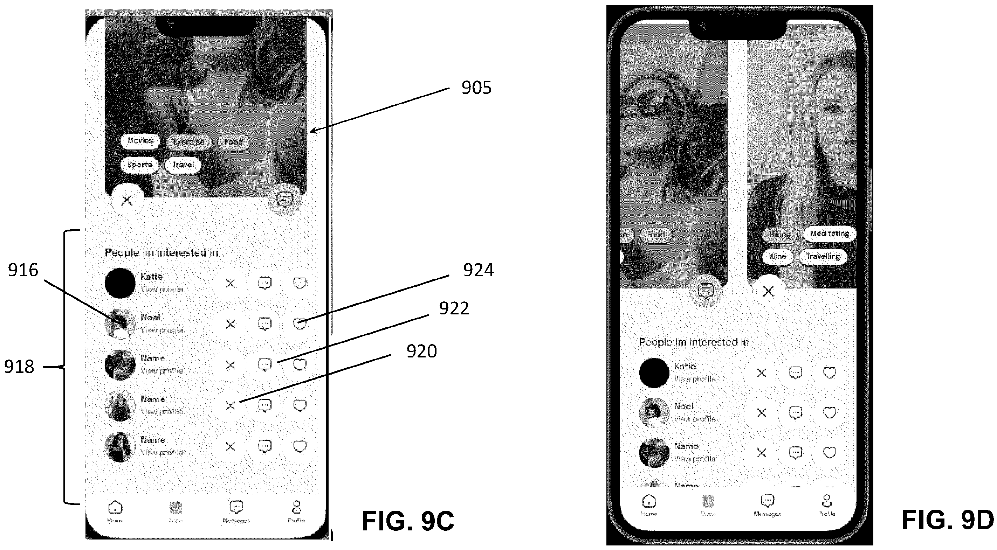

Turning to FIG. 9C, once the event creator has initiated communication with an interested user, the interested user's profile image and associated details are removed from carousel 905 and an indication of the interested user appears in a vertically-scrollable shortlist 918 that is displayed beneath carousel 905. As can be seen in FIG. 9C, the user has scrolled downwardly away from carousel 905. For example, the user has scrolled by moving their finger in contact with the screen of their mobile device 102 in a vertical direction, between the top and bottom edges of the screen portion identified by vertically-scrollable shortlist 918. As a result, the mobile device 102 now simultaneously displays two scrollable carousels (carousel 905 and shortlist 918) that are scrollable in different directions. In particular, while being presented with the user interface shown in FIG. 9C, the event creator may scroll horizontally through carousel 905 of interested users and may scroll vertically through shortlist 918. As can be seen in FIG. 9D, the event creator has adjusted the degree of vertical scrolling of shortlist 918 such that greater portions of user profiles in carousel 905 of interested users are shown, whereas less of shortlist 918 is visible. According to some embodiments, carousel 905 and shortlist 918 may be configured to be scrollable in different orientations. For example, carousel 905 may be vertically scrollable, and shortlist may be horizontally scrollable.

Shortlist 918 includes an indication of each interested user with whom the event creator has initiated communication. For each such interested user, the user interface displays a miniature profile photo of the interested user, as well as a first user interface element 920, a second user interface element 922, and a third user interface element 924. The event creator may press or otherwise interact with the miniature profile photo to view further details of the interested user (for example, the user may be directed to a user interface similar to the one shown in FIG. 7).

By interacting with user interface element 920, the event creator may remove the interested user from shortlist 918. For example, the event creator may decide, after communicating with the interested user, that they no longer wish to attend the event with the interested user, and may remove them from shortlist 918 by pressing user interface element 920.

By interacting with user interface element 922, the event creator may bring up the chat history associated with the interested user (for example, similarly to what is shown in FIGS. 10A and 10B), and may continue to send and receive messages to/from the interested user. FIG. 10A illustrates an icon 1010 that temporarily appears to remind the user of the event associated with the user with whom they are exchanging messages. Icon 1010 appears for a pre-set time and then disappears, as shown in FIG. 10B.

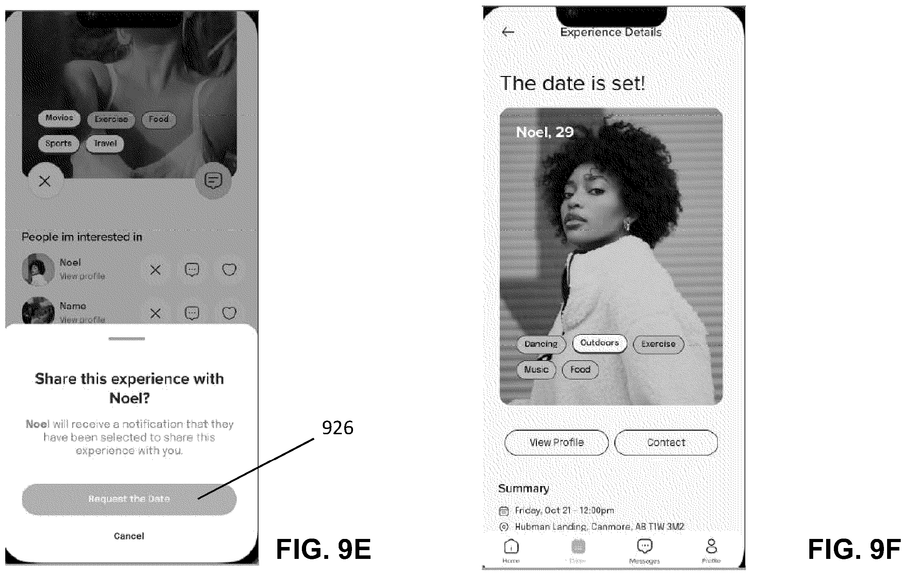

By interacting with user interface element 924, the event creator may confirm that they wish to attend the event with the selected interested user, and the display changes to the user interface shown in FIG. 9E. In FIG. 9E, after having indicated their desire to attend the created event with a selected interested user in shortlist 918, the event creator is presented with a message advising that the selected interested user will be informed of their intention. This confirmation message is generated to prevent the event creator accidentally indicating their desire to attend the event with another interested user with whom the event creator does not in fact wish to attend the event.

After confirming that it is indeed their intention to attend the event with the selected interested user (by interacting with user interface element 926), the event creator is presented with the user interface shown in FIG. 9F. At this point, the selected interested user is informed that they have been chosen by the event creator to attend the event with the event creator. Meanwhile, non-selected interested users in shortlist 118 are informed that they have not been selected.

The event creator is prevented from confirming that they wish to attend the event with an interested user before they have initiated communication with the interested user (i.e., before the interested user has been moved from carousel 905 to shortlist 918).

The word "a" or "an" when used in conjunction with the term "comprising" or "including" in the claims and/or the specification may mean "one", but it is also consistent with the meaning of "one or more", "at least one", and "one or more than one" unless the content clearly dictates otherwise. Similarly, the word "another" may mean at least a second or more unless the content clearly dictates otherwise.

The terms "coupled", "coupling" or "connected" as used herein can have several different meanings depending on the context in which these terms are used. For example, as used herein, the terms coupled, coupling, or connected can indicate that two elements or devices are directly connected to one another or connected to one another through one or more intermediate elements or devices via a mechanical element depending on the particular context. The term "and/or" herein when used in association with a list of items means any one or more of the items comprising that list.

As used herein, a reference to "about" or "approximately" a number or to being "substantially" equal to a number means being within +/- 10% of that number.

Use of language such as "at least one of X, Y, and Z," "at least one of X, Y, or Z," "at least one or more of X, Y, and Z," "at least one or more of X, Y, and/or Z," or "at least one of X, Y, and/or Z," is intended to be inclusive of both a single item (e.g., just X, or just Y, or just Z) and multiple items (e.g., {X and Y}, {X and Z}, {Y and Z}, or {X, Y, and Z}). The phrase "at least one of" and similar phrases are not intended to convey a requirement that each possible item must be present, although each possible item may be present.

While the disclosure has been described in connection with specific embodiments, it is to be understood that the disclosure is not limited to these embodiments, and that alterations, modifications, and variations of these embodiments may be carried out by the skilled person without departing from the scope of the disclosure.

It is furthermore contemplated that any part of any aspect or embodiment discussed in this specification can be implemented or combined with any part of any other aspect or embodiment discussed in this specification.
Aspects and features of the present disclosure are set forth in the following numbered items which contain the subject matter of the claims of the parent application as filed.
1. A method of facilitating attending of events between users in a computer network, comprising:
   performing by one or more computer processors:
      receiving, from a first user in the network, event parameters defining an event,
      wherein the event parameters include:
         a location of the event; and
         a date of the event;
      allowing the event parameters to be viewed by each of multiple second users in the network;
      receiving, from each of one or more of the second users, an indication of interest in the event;
      enabling the first user to initiate communication, using the one or more computer processors, with each of the one or more second users interested in the event while preventing the one or more second users interested in the event from initiating communication, using the one or more computer processors, with the first user;
      receiving, from the first user, a selection, from among the one or more second users interested in the event, of a second user with whom the first user wishes to attend the event; and
      transmitting a message to the selected second user indicating that they have been selected to attend the event with the first user.
2. The method of item 1, wherein the event parameters further include one or more event parameters selected from the group consisting of:
   one or more activities associated with the event;
   a time of the event;
   an age range;
   one or more genders;
   a type of event;
   one or more images; and
   a payment option.
3. The method of item 2, wherein the event parameters further include each event parameter in the group consisting of:
   the one or more activities associated with the event;
   the time of the event;
   the age range;
   the one or more genders;
   the type of event;
   the one or more images; and
   the payment option.
4. The method of any one of items 1-3, wherein:
   the event parameters further include one or more event parameters selected from the group consisting of:
      an age range;
      one or more genders; and
      a type of event;
   each user in the network is associated with one or more user parameters selected from the group consisting of: an age; one or more genders; and one or more preferred types of events; and
   allowing the event parameters to be viewed by each of the second users in the network comprises:
      identifying the second users by filtering the users in the network based on the event parameters defining the event and based on the one or more user parameters associated with each user; and
   allowing the event parameters to be viewed by each of the identified second users.
5. The method of any one of items 1-4, wherein the one or more computer processors are configured to:
   prevent the first user from selecting the second user with whom the first user wishes to attend the event before the first user has initiated communication, using the one or
   more computer processors, with the second user with whom the first user wishes to attend the event.
6. A non-transitory computer-readable medium storing computer program code configured, when executed by one or more computer processors, to cause the one or more computer processors to perform a method comprising:
   receiving, from a first user in a network, event parameters defining an event, wherein the event parameters include:
      a location of the event; and
      a date of the event;
   allowing the event parameters to be viewed by each of multiple second users in the network;
   receiving, from each of one or more of the second users, an indication of interest in the event;
   enabling the first user to initiate communication, using the one or more computer processors, with each of the one or more second users interested in the event while preventing the one or more second users interested in the event from initiating communication, using the one or more computer processors, with the first user;
   receiving, from the first user, a selection, from among the one or more second users interested in the event, of a second user with whom the first user wishes to attend the event; and
   transmitting a message to the selected second user indicating that they have been selected to attend the event with the first user.
7. The non-transitory computer-readable medium of item 6, wherein the event parameters further include one or more event parameters selected from the group consisting of:
   one or more activities associated with the event;
   a time of the event;
   an age range;
   one or more genders;
   a type of event;
   one or more images; and
   a payment option.
8. The non-transitory computer-readable medium of item 7, wherein the event parameters further include each event parameter in the group consisting of:
   the one or more activities associated with the event;
   the time of the event;
   the age range;
   the one or more genders;
   the type of event;
   the one or more images; and
   the payment option.
9. The non-transitory computer-readable medium of any one of items 6-8, wherein:
   the event parameters further include one or more event parameters selected from the group consisting of:
      an age range;
      one or more genders; and
      a type of event;
   each user in the network is associated with one or more user parameters selected from the group consisting of: an age; one or more genders; and one or more preferred types of events; and
   allowing the event parameters to be viewed by each of the second users in the network comprises:
      identifying the second users by filtering the users in the network based on the event parameters defining the event and based on the one or more user parameters associated with each user; and
      allowing the event parameters to be viewed by each of the identified second users.
10. The non-transitory computer-readable medium of any one of items 6-9, wherein the method further comprises:
   preventing the first user from selecting the second user with whom the first user wishes to attend the event before the first user has initiated communication, using the one or
   more computer processors, with the second user with whom the first user wishes to attend the event.
11. A non-transitory computer-readable medium storing computer program code configured, when executed by one or more computer processors, to cause the one or more computer processors to control a user interface on a mobile device, comprising:
   displaying, on a display of the mobile device, a first user interface element for creating an event by a first user;
   simultaneously displaying, on the display:
      at least a portion of a first shortlist comprising one or more profiles of one or
      more second users interested in the event; and
      at least a portion of a second shortlist comprising, for each of one or more second users selected from the one or more second users interested in the event, one or more second user interface elements.
12. The non-transitory computer-readable medium of item 11, wherein each profile of the one or more profiles comprises an image of the second user associated with the profile.
13. The non-transitory computer-readable medium of item 11 or 12, wherein each profile of the one or more profiles comprises a user interface element for removing, from the first shortlist, the second user associated with the profile.
14. The non-transitory computer-readable medium of any one of items 11-13, wherein each profile of the one or more profiles comprises a user interface element for allowing the first user to initiate communication, using the one or more computer processors, with the second user associated with the profile.
15. The non-transitory computer-readable medium of any one of items 11-14, wherein, for each second user in the second shortlist, the one or more second user interface elements comprise one or both of:
   a user interface element for allowing the first user to initiate communication, using the one or more computer processors, with the second user; and
   a user interface element for sending, using the one or more computer processors, a preset message to the second user confirming that the second user has been selected to attend the event with the first user.
16. The non-transitory computer-readable medium of any one of items 11-15, wherein controlling the user interface further comprises:
   enabling, by the one or more computer processors, scrolling of the first shortlist without causing the at least a portion of the second shortlist to no longer be displayed on the display.
17. The non-transitory computer-readable medium of any one of items 11-16, wherein controlling the user interface further comprises:
   enabling, by the one or more computer processors, scrolling of the second shortlist without causing the at least a portion of the first shortlist to no longer be displayed on the display.
18. The non-transitory computer-readable medium of any one of items 11-17, wherein controlling the user interface further comprises:
   enabling, by the one or more computer processors, scrolling of the first shortlist in a first direction and scrolling of the second shortlist in a second direction.
19. The non-transitory computer-readable medium of item 18, wherein:
   the first direction is one of a horizontal direction extending across a width of the mobile device and a vertical direction extending across a height of the mobile device; and
   the second direction is the other of the horizontal direction extending across the width of the mobile device and the vertical direction extending across the height of the mobile device.

## Claims

1. A non-transitory computer-readable medium storing computer program code configured, when executed by one or more computer processors, to cause the one or more computer processors to control a user interface on a mobile device, comprising:
displaying, on a display of the mobile device, a first user interface element for creating an event by a first user;
simultaneously displaying, on the display:
at least a portion of a first shortlist comprising one or more profiles of one or more second users interested in the event; and
at least a portion of a second shortlist comprising, for each of one or more second users selected from the one or more second users interested in the event, one or more second user interface elements.

2. The non-transitory computer-readable medium of claim 1, wherein each profile of the one or more profiles comprises an image of the second user associated with the profile.

3. The non-transitory computer-readable medium of claim 1 or 2, wherein each profile of the one or more profiles comprises a user interface element for removing, from the first shortlist, the second user associated with the profile.

4. The non-transitory computer-readable medium of any one of claims 1-3, wherein each profile of the one or more profiles comprises a user interface element for allowing the first user to initiate communication, using the one or more computer processors, with the second user associated with the profile.

5. The non-transitory computer-readable medium of any one of claims 1-4, wherein, for each second user in the second shortlist, the one or more second user interface elements comprise one or both of:
a user interface element for allowing the first user to initiate communication, using the one or more computer processors, with the second user; and
a user interface element for sending, using the one or more computer processors, a preset message to the second user confirming that the second user has been selected to attend the event with the first user.

6. The non-transitory computer-readable medium of any one of claims 1-5, wherein controlling the user interface further comprises:
enabling, by the one or more computer processors, scrolling of the first shortlist without causing the at least a portion of the second shortlist to no longer be displayed on the display.

7. The non-transitory computer-readable medium of any one of claims 1-6, wherein controlling the user interface further comprises:
enabling, by the one or more computer processors, scrolling of the second shortlist without causing the at least a portion of the first shortlist to no longer be displayed on the display.

8. The non-transitory computer-readable medium of any one of claims 1-7, wherein controlling the user interface further comprises:
enabling, by the one or more computer processors, scrolling of the first shortlist in a first direction and scrolling of the second shortlist in a second direction, and optionally wherein:
the first direction is one of a horizontal direction extending across a width of the mobile device and a vertical direction extending across a height of the mobile device; and
the second direction is the other of the horizontal direction extending across the width of the mobile device and the vertical direction extending across the height of the mobile device.

9. A method of controlling a user interface on a mobile device, comprising:
displaying, on a display of the mobile device, a first user interface element for creating an event by a first user;
simultaneously displaying, on the display:
at least a portion of a first shortlist comprising one or more profiles of one or more second users interested in the event; and
at least a portion of a second shortlist comprising, for each of one or more second users selected from the one or more second users interested in the event, one or more second user interface elements.

10. The method of claim 9, wherein each profile of the one or more profiles comprises an image of the second user associated with the profile.

11. The method of claim 9 or 10, wherein each profile of the one or more profiles comprises a user interface element for removing, from the first shortlist, the second user associated with the profile.

12. The method of any one of claims 9-11, wherein each profile of the one or more profiles comprises a user interface element for allowing the first user to initiate communication, using one or more computer processors of the mobile device, with the second user associated with the profile.

13. The method of any one of claims 9-12, wherein, for each second user in the second shortlist, the one or more second user interface elements comprise one or both of:
a user interface element for allowing the first user to initiate communication, using one or more computer processors of the mobile device, with the second user; and
a user interface element for sending, using the one or more computer processors, a preset message to the second user confirming that the second user has been selected to attend the event with the first user.

14. The method of any one of claims 9-13, wherein controlling the user interface further comprises one or both of:
enabling, by one or more computer processors of the mobile device, scrolling of the first shortlist without causing the at least a portion of the second shortlist to no longer be displayed on the display; and
enabling, by one or more computer processors of the mobile device, scrolling of the second shortlist without causing the at least a portion of the first shortlist to no longer be displayed on the display.

15. The method of any one of claims 9-14, wherein controlling the user interface further comprises:
enabling, by one or more computer processors of the mobile device, scrolling of the first shortlist in a first direction and scrolling of the second shortlist in a second direction, and
optionally wherein:
the first direction is one of a horizontal direction extending across a width of the mobile device and a vertical direction extending across a height of the mobile device; and
the second direction is the other of the horizontal direction extending across the width of the mobile device and the vertical direction extending across the height of the mobile device.
